# EUROPÄISCHE PATENTSCHRIFT

(11) **EP 1 710 452 B1**
(45) Veröffentlichungstag und Bekanntmachung des Hinweises auf die Patenterteilung: **11.06.2008**
(21) Anmeldenummer: 06007017.4
(22) Anmeldetag: 01.04.2006
(51) Int. Cl.: F16B 7/18, E04B 2/78

(54) **System**
System
Système

(30) Priorität: 08.04.2005 DE 202005005687 U
(43) Veröffentlichungstag der Anmeldung: 11.10.2006
(73) Patentinhaber: Rixen, Wolfgang, Dipl.-Ing., 42699 Solingen (DE); Pies, Gerrit, 42699 Solingen (DE)
(72) Erfinder: Rixen, Wolfgang, Dipl.-Ing., 42699 Solingen (DE); Pies, Gerrit, 42699 Solingen (DE)
(74) Vertreter: Draudt, Axel Hermann Christian

(56) Entgegenhaltungen:
- EP-A- 0 458 069
- EP-A- 0 666 425
- EP-A- 0 667 110
- DE-U1- 9 320 114

## Beschreibung

Die Erfindung bezieht sich auf ein System aus zwei T-förmig miteinander verbundenen, mit hinterschnittenen Längsnuten versehenen Profilstäben, mit mindestens einer an ihrem einen Ende einen Kopf aufweisenden Verbindungsschraube die parallel zur Symmetrieachse eines längs verlaufenden ersten Profilstabes in einer hinterschnittenen Längsnut desselben angeordnet ist, mit ihrem anderen Ende in eine in einer hinterschnittenen Längsnut des quer verlaufenden zweiten Profilstabs angeordnete Schraubenmutter eingreift und die mit ihrem Kopf ein zylindrisches Widerlagerstück hintergreift, das in die hinterschnittene Längsnut des ersten Profilstabs axial unverschieblich eingebaut ist und das eine Durchtrittsbohrung für die Verbindungsschraube hat, wobei die Symmetrieachse des zylindrischen Widerlagerstücks koaxial zur Symmetrieachse der Durchtrittsbohrung für die Verbindungsschraube angeordnet ist und der Außendurchmesser des Widerlagerstücks dem Querschnitt der hinterschnittenen Längsnut des ersten Profilstabs so angepaßt ist, dass das auf dem Außenumfang des zylindrischen Widerlagerstücks angebrachte Gewinde ein in den Werkstoff des ersten Profilstabs eingreifendes selbstschneidendes Gewinde ist.

Aus der DE 34 38 773 A1 ist ein System von querverbundenen Profilstäben bekannt. Das Widerlagerstück ist flach ausgebildet, so dass sein Durchmesser größer als seine Länge ist. Die bekannte Querverbindung genügt den Stabilitätsanforderungen vollständig. Es ist jedoch erforderlich, in dem an zuschließenden Profilstab zylindrische Ausnehmungen quer zu seiner Längserstreckung herzustellen, um das zylindrische Widerlagerstück unterbringen zu können. Darüber hinaus ist durch das erkennbare zylindrische Widerlagerstück stets eine Befestigungsstelle markiert. Letztlich kann ein einmal mit zylindrischen Querbohrungen versehener Profilstab nicht universell wiederverwendet werden, weil die Querbohrungen stets erkennbar bleiben.

Aus der EP 0 233 525 B1 ist bereits eine Querverbindung bekannt, dessen anzuschließender Profilstab nach einem Lösen der Querverbindung uneingeschränkt wiederverwendbar ist. Die bekannte verbindungseinrichtung besteht im wesentlichen aus drei Teilen, nämlich einem in die hinterschnittene Längsnut des querverlaufenden Profilstabs einsetzbaren, Anschlussgewinde aufweisenden Nutenstein, an dem ein Zwischenkupplungsstück lösbar zu befestigen ist, das seinerseits mit einer selbstschneidenden Mutter lösbar verbunden werden kann, die von der Stirnseite des anzuschließenden Profilstabs in dessen zentrale Innenkammer eingeschraubt werden kann. Bei dieser bekannten Querverbindung wird zwar vermieden, Querbohrungen oder sonstwie gestaltete Ausnehmungen zur Aufnahme eines Widerlagerstücks herstellen zu müssen. Die mit einem Schneidgewinde versehene Mutter greift jedoch zentral an dem anzuschließenden Profilstab an. Das Zwischenkupplungsstück benötigt daher ein unverdrehbar befestigtes Zentrierstück, welches ebenfalls in die zentrale Kammer des anzuschließenden Profilstabs eingreifen muß. Die bekannte selbstschneidende Mutter und das bekannte Zwischenkupplungsstück müssen infolgedessen speziell auf die Bemessung der zentralen Kammer des anzuschließenden Profilstabs abgestimmt sein. Außerdem werden die Längsnuten bei der Befestigung des Zwischenkupplungsstücks zum Einbringen von Verbindungsschrauben dieses Zwischenkupplungsstücks mit dem Nutenstein des querverlaufenden Profilstabs benötigt. Die bekannte Querverbindung ist daher baulich aufwendig und in ihrer Anwendung auf einen einzigen Querschnitt des anzuschließenden Profilstabs abgestimmt .

Aus der EP 458 069 B1 ist ein System der eingangs genannten Art bekannt. Dieses System ist bezüglich Festigkeit und Handhabbarkeit völlig zufriedenstellend. Allerdings ist dieses System bei einer Verwendung in Reinräumen bzw. auch Reinsträumen weniger geeignet, da die Längsnuten leicht Schmutz aufnehmen und nur mit größter Mühe gereinigt werden können.

Der Erfindung liegt daher die Aufgabe zugrunde, ein System der eingangs genannten Art anzugeben, das bei mindestens gleicher Festigkeit und Handhabbarkeit dessen Reinigung deutlich erleichtert.

Diese Aufgabe wird bei einem System der eingangs genannten Art erfindungsgemäß dadurch gelöst, dass die Längsnuten mit einem einstückig mit den Profilstäben verbundenen Abschlussteil verschlossen sind, wobei der zum Grund der Längsnuten weisende Bereich des Abschlussteils eine an dem Außendurchmesser angepaßte Kontur des Widerlagerstücks aufweist, wobei dieser Effekt noch durch das Einbringen der Gewindespitzen erhöht wird, indem lediglich die Spitzen des Gewindes in die Kontur eingreifen.

Der Kern der Erfindung besteht darin, dass das System die äußerst vorteilhaften Längsnuten aufweist, aber nicht deren Nachteile bezüglich einer Reinigung zur Verwendung in Reinsträumen. Dabei hat es sich als zusätzlich vorteilhaft erwiesen, dass aufgrund des Abschlussteils die eingeschraubten Widerstandsstücke eine deutlich höhere Kraft aufnehmen und auf den Profilstab übertragen können, da ein Aufbiegen bzw. Aufweiten der Nutenöffnung aufgrund des Vorhandenseins des Abschlußssteils vermieden werden kann. Außerdem kann ungewolltes zerstören des Abschlussteils durch das Eindrehen des Widerlagerstücks weitgehendst vermieden werden.

Obwohl es möglich ist, die Verbindungsschraube an einer Stirnseite des Profilstabes in die Längsnut einzuführen und auch mit einem extrem langen Werkzeug von der entgegengesetzten Stirnseite aus zu betätigen, ist es für die Handhabung vorteilhaft, wenn der erste Profilstab eine Öffnung zum Einführen und/oder Betätigen der Verbindungsschraube aufweist.

Nicht nur aus ästhetischen Gründen ist es dabei vorteilhaft, wenn die Öffnung eine Montagebohrung ist.

Diese Montagebohrung kann nicht nur formschön sondern vor allem staubdicht mittels einer Kappe verschlossen werden.

Damit nicht auch noch die Verbindungsschraube mit einem selbstschneidenden Gewinde versehen werden muß, ist es vorteilhaft, wenn der zweite Profilstab im Bereich der Schraubenmutter eine Durchtrittsöffnung für die Verbindungsschraube aufweist.

Wenn im Bereich seines Gewindes das Widerlagerstück eine Schneidkanten bildende Querausnehmung aufweist, können die durch das Eindrehen entstehenden Späne in diese Querausnehmung weitestgehend aufgenommen werden. Dadurch verbleiben diese Schneidspäne nicht mehr im Gewindebereich und es wird der störende Einfluß dieser Späne vermieden.

Vorteilhafterweise ist der Außenumriss des zylindrischen Widerlagerstücks im Bereich der schneidkantenfreien Querausnehmung konisch ausgebildet. Diese Gestaltung des Widerlagerstücks erleichtert sein Eindrehen in die Längsnut des anzuschließenden Profilstabs.

Um das Eindrehen des zylindrischen Widerlagerstücks zu erleichtern, andererseits aber die Auszugfestigkeit dieses Widerlagerstücks zu erhöhen, ist die Querverbindung so ausgestaltet, dass das Schneidgewinde des zylindrischen Widerlagerstücks dem quer verlaufenden Profilstab zugewendet steilere Flanken aufweist, als verbindungsschraubenkopfseitig.

Wenn die Durchtrittsbohrung auf der dem Kopf der Verbindungsschraube abgewandten Seite als Innenunrundausnehmung ausgebildet ist, kann das zylindrische Widerlagerstück nach seinem Eindrehen in eine Längsnut des anzuschließenden Profilstabs zurückgedreht werden, um das sicherungsvorsprungseitige Ende des selbstschneidenden Gewindes mit der Stirnseite des anzuschließenden Profilstabs genau fluchten zu lassen.

Damit der Kopf der Verbindungschraube so groß wie möglich ist, um deren Betätigung mit möglichst großen Abmessungen eines Verdrehwerkzeugs für die Verbindungsschraube zu erreichen, ist der Außendurchmesser des Kopfes der Verbindungsschraube etwa gleich dem Durchmesser der Stirnseite des zylindrischen Widerlagerstücks, die die Querausnehmung aufweist.

Zur Erhöhung der Drehfestigkeit und auch der Stabilität der Verbindung ist es vorteilhaft, wenn die Profilstäbe mindestens mit zwei Verbindungsschrauben, zwei Widerlagerstücken und zwei Schraubenmuttern miteinander verbunden sind.

Wenn das Widerlagerstück an dem schraubenkopfseitigen Ende mit einem Innengewindeabschnitt versehen ist, der zu dem Außengewinde der Verbindungsschraube (20) paßt, kann die Verbindungsschraube quasi unverlierbar mit dem Widerlagerstück gehandhabt werden.

Aus der EP 0 666 425 A2 ist es bekannt, hinterschnittene Nuten von Profilstäben mit einem Anschlussteil zu verschließen.

Weitere Merkmale und Vorteile der Erfindung ergeben sich aus folgender Beschreibung eines Ausführungsbeispiels sowie aus den Figuren, auf die Bezug genommen wird. Es zeigen:
- Fig. 1a+b: zwei Querschnittsansichten eines Systems in normalem und vergrößertem Maßstab;
- Fig.2eine: teilweise geschlossene Querschnittsansicht des ersten Profilstabes mit Verbindungsschraube und dem Widerlagerstück vor dem Eindrehen in die Längsnut;
- Fig.3a+b: eine Perspektiv- und Querschnittsansicht ähnlich der Fig.2 mit in etwa halb eingedrehtem Widerlagerstück;
- Fig.4a+b: eine der Fig.3 ähnliche Ansicht mit vollständig eingedrehtem Widerlagerstück;
- Fig.5a+b: eine perspektivische Ansicht sowie eine teilweise geschnittene Querschnittsansicht des ersten Profilstabes mit vollständig eingedrehtem Widerlagerstück und vollständig eingeführter Verbindungsschraube;und
- Fig.6eine: Explosionsdarstellung des Systems.

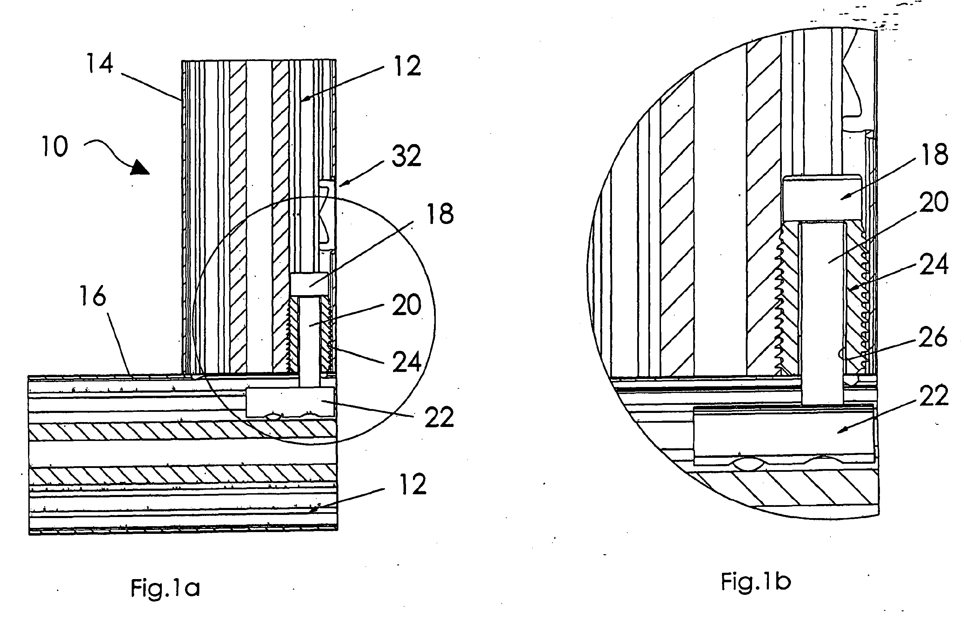

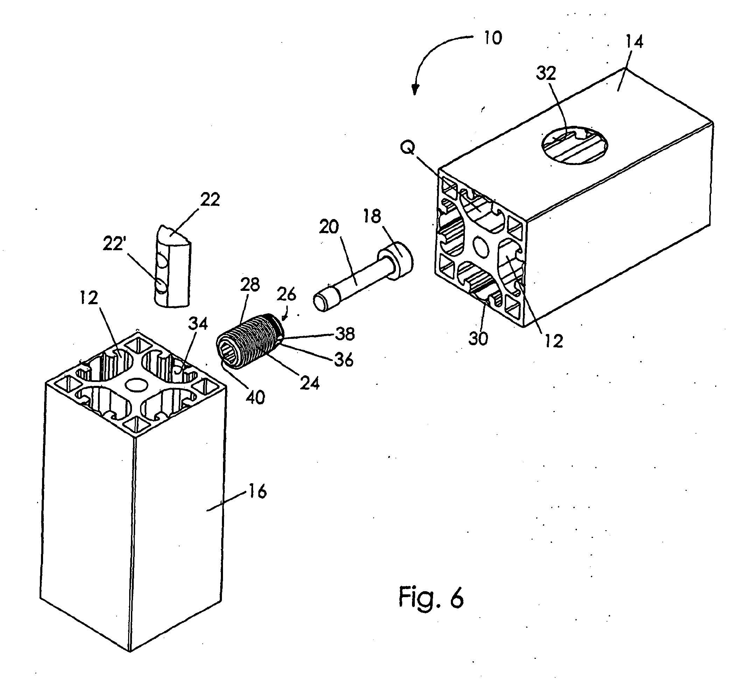

Unter Bezugnahme auf die Fig. 1 bis 6 wird nunmehr ein Ausführungsbeispiel eines Systems 10 beschrieben. Dabei bedeuten gleiche Bezugszahlen gleiche technische Merkmale, soweit nichts anderes ausgesagt ist.

Das System 10 besteht aus zwei T-förmig miteinander verbundenen ersten und zweiten Profilstäben 14 und 16, die mit hinterschnittenen Längsnuten 12 versehen sind. Diese beiden Profilstäbe 14 und 16 sind mit mindestens einer an ihrem einen Ende mit einem Kopf 18 versehene Verbindungsschraube 20 miteinander verbunden, wobei diese Verbindungsschraube 20 parallel zur Symmetrieachse des ersten Profilstabes 14 in einer hinterschnittenen Längsnut 12 desselben angeordnet ist. Mit dem anderen Ende greift diese Verbindungsschraube 20 in eine in einer hinterschnittenen Längsnut 12 des quer verlaufenden zweiten Profilstabes 16 angeordnete Schraubenmutter 22 ein. Damit eine Verbindung hergestellt werden kann, hintergreift der Kopf 18 der Verbindungsschraube 20 ein zylindrisches Widerlagerstück 24, das in die hinterschnittene Längsnut 12 des ersten Profilstabs 14 axial unverschieblich eingebaut ist und eine Durchtrittsbohrung 26 für die Verbindungsschraube 20 hat. Die Symmetrieachse des zylindrischen Widerlagerstücks 24 ist koaxial zur Symmetrieachse der Durchtrittsbohrung 26 für die Verbindungsschraube 20 angeordnet. Der Außendurchmesser D des Widerlagerstücks 24 ist dem Querschnitt Q der hinterschnittenen Längsnut 12 des ersten Profilstabes 14 so angepaßt, daß das auf dem Außenumfang des zylindrischen Widerlagerstücks 24 angebrachte Gewinde ein in den Werkstoff des ersten Profilstabes 14 eingreifendes, selbstschneidendes Gewinde 28 ist.

Damit die Längsnuten 12 nicht verschmutzen können und vor allen Dingen die Profilstäbe 14 und 16 einfach gereinigt werden können, ist bei diesen Profilstäben 14 und 16 als Besonderheit vorgesehen, die Längsnuten 12 mit einem einstückig mit den Profilstäben 14 und 16 verbundenen Abschlußteil 30 zu verschließen. Dabei ist es selbstverständlich, daß dieses Abschlußteil 30 an vorbestimmbaren Stellen in geeigneter Art und Weise entfernt werden kann.

Dieses Abschlußteil 30 ist derart geformt, daß es mit der Außenoberfläche der Profilstäbe 14 und 16 zur Ausbildung eines viereckigen Profilstabes 14 und 16 fluchtet, während es bei dem nach innen weisenden Bereich an die Außenkontur des im Querschnitt runden Widerlagerstücks 24 weitestgehend angepaßt ist. Diese Anpassung kann derart sein, daß die Spitzen des Gewindes 28 diese angepaßte nach innen weisende Oberfläche gerade eben kontaktiert.

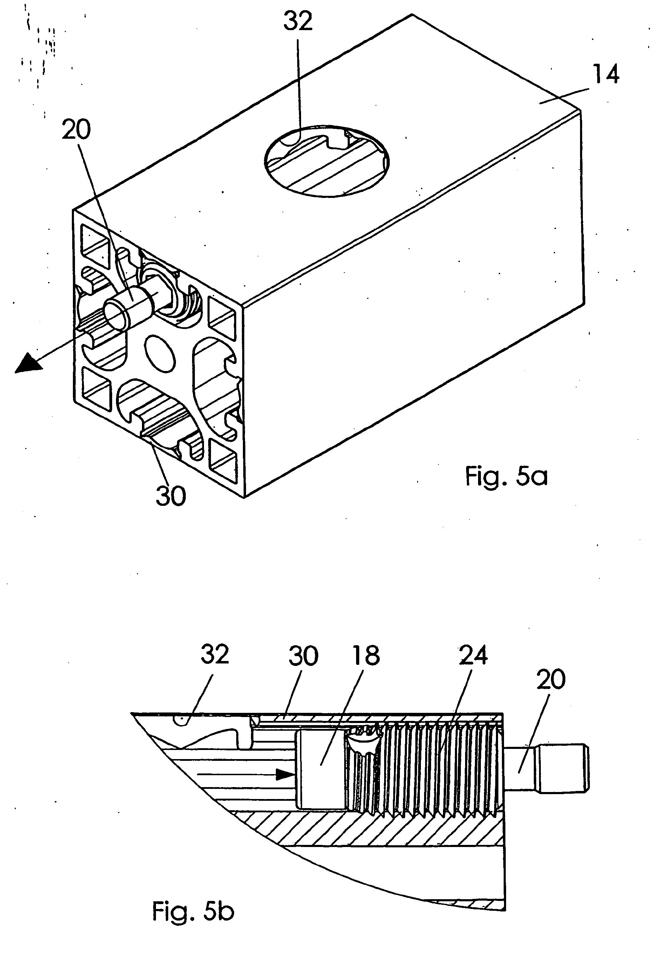

Bei dem dargestellten Ausführungsbeispiel ist allerding die Abmessung derart gewählt, daß die Spitzen des selbstschneidenden Gewindes 28 geringfügig in das Material des Abschlußteils 30 in diesen Bereich eindringen und somit den Halt des Widerlagerstücks 24 innerhalb der Längsnut 12 des ersten Profilstabes 14 weiter erhöht ist. Dieses geringfügige Eingreifen des Gewindes 28 in den Abschlußteil 30 ist besonders anschaulich in den Figuren 1b und 5b gezeigt.

Des weiteren weist der erste Profilstab 14 in der Nähe des an den zweiten Profilstab 16 anliegenden Stirnendes eine Öffnung 32 auf, die bei dem dargestellten Ausführungsbeispiel eine Montagebohrung 32 ist. Je nach Durchmesser der Montagebohrung 32 dient diese zum Einführen und Betätigen der Verbindungsschraube 20, oder aber lediglich der Betätigung der Verbindungschraube 20. Daher ist ein langes Betätigungswerkzeug für die Verbindungsschraube 20, das von der entgegengesetzten Stirnseite entlang der Längsnut 12 einzuführen wäre, nicht mehr notwendig. Hinzu kommt, daß es durchaus vorkommen kann, daß das andere Stirnende ebenfalls schon mit einem weiteren Profilstab verschlossen ist, so daß überhaupt keine Möglichkeit mehr besteht, durch dieses Stirnende ein Betätigungswerkzeug einzuführen.

Obwohl in den Figuren nicht dargestellt, kann und wird üblicherweise diese Montagebohrung 32 mit einer Kappe abgedeckt werden.

Bei dem gezeigten Ausführungsbeispiel weist der zweite Profilstab 16 im Bereich der Schraubenmutter 22 eine Durchtrittsöffnung 34 auf, durch die die Verbindungsschraube 20 in die Längsnut 12 des zweiten Profilstabs 16 eintauchen und die Schraubenmutter 22 ergreifen kann. Dadurch erübrigt es sich, die Verbindungsschraube 20 ebenfalls als selbstschneidende Einrichtung auszubilden.

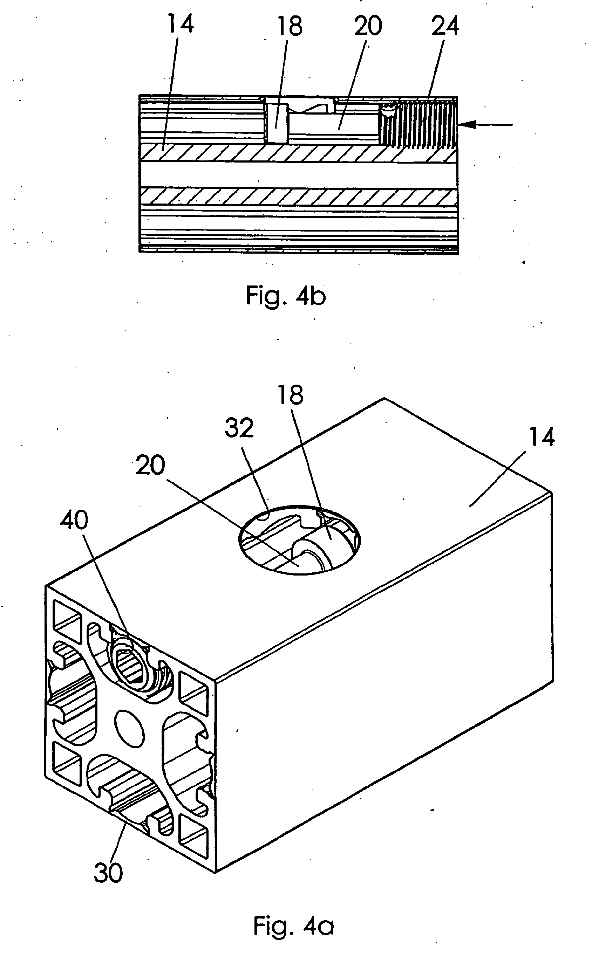

Das zylindrische Widerlagerstück 24 besitzt eine Durchtrittsbohrung 26 für die Verbindungsschraube 20. Der Außenumfang des Widerlagerstücks 24 ist gleichachsig mit der Durchtrittsbohrung 26, so daß beide die selbe Achse aufweisen. Der Außendurchmesser D des Widerlagerstücks 24 ist so bemessen, daß dieses in den Querschnitt Q der Längsnut 12 hineingedreht werden kann. Die Fig.4a zeigt diesbezüglich, daß das Widerlagerstück 24 den Nutengrund und die den Längsnut-Außenschlitz bildenden Wandvorsprünge sowie den entsprechend geformten Bereich des Abschlußteils 30 tangiert.

Der Befestigung des Widerlagerstücks 24 im ersten Profilstab 12 dient das selbstschneidende Gewinde 28, welches sägezahnartig ausgebildet ist. Infolge dessen sind in Richtung der Schraubenmutter 22 steile Zahnflanken 28' vorhanden, während die gegenüberliegenden Flanken 28'' der Schneidgewindezähne vergleichsweise flach ausgebildet sind. Im Bereich des Gewindes 28 ist eine Querausnehmung 38 vorgesehen, so daß mindestens eine Schneidkante 36 vorhanden ist. Im Bereich der Schneidkante 36 liegt eine konische Gestaltung des widerlagerstücks 24 vor, d.h. der Durchmesser des selbstschneidenden Gewindes 28 steigt vom stirnseitigen Durchmesser des zylindrischen Widerlagerstücks 24 auf dessen Außendurchmesser D an.

Die Verbindungsschraube 20 besitzt den Kopf 18, der sich in Einbaulage auf dem Widerlagerstück 24 abstützt. Der Durchmesser des Kopfes 18 der Verbindungsschraube 20 ist etwa gleich dem Durchmesser der Stirnseite des zylindrischen Widerlagerstücks 24, bei der die Querausnehmung 38 angeordnet ist.

Gemäß den Zeichnungen ist die Schraubenmutter 22 mit einem parabelförmigen Querschnitt ausgebildet, so daß sie mit einer Längskante quer zum zweiten Profilstab 16 in dessen Längsnut 12 eingesetzt werden kann, also ohne in letzterer längs über die gesamte Länge des Profilstabes 16 verschoben werden zu müssen. Die relative axiale Lage im Profilstab 16 wird durch eine federbeaufschlagte Kugel 22' gesichert.

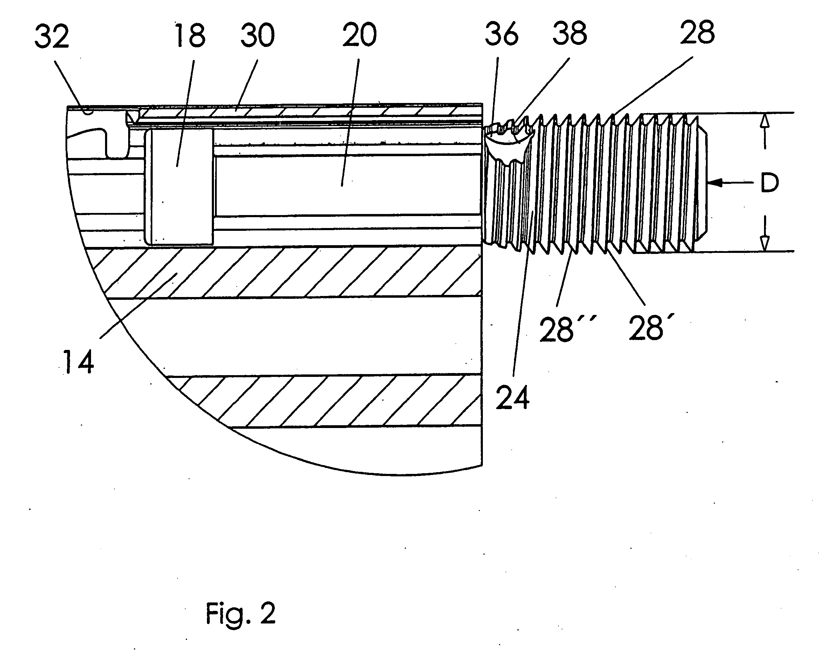

Wie sich anhand der Figuren 2 bis 5 ergibt, erfolgt der Zusammenbau der ersten und zweiten Profilstäbe 14 und 16 derart, daß zunächst das Widerlagerstück 24 in die Längsnut 12 eingedreht wird. Dabei stellt das selbstschneidende Gewinde 28 bzw. deren Schneidkante 36 das erforderliche Befestigungsgewinde in der Längsnut 12 her.

Dabei kann das Widerlagerstück 24 schraubkopfseitig mit soviel Innengewinde versehen sein, daß die Verbindungsschraube 20, die vorzugsweise nur an ihrer Spitze mit einem Außengewinde versehen ist, quasi unverlierbar nach ihrem Einschrauben von dem Widerlagerstück 24 gehalten werden kann.

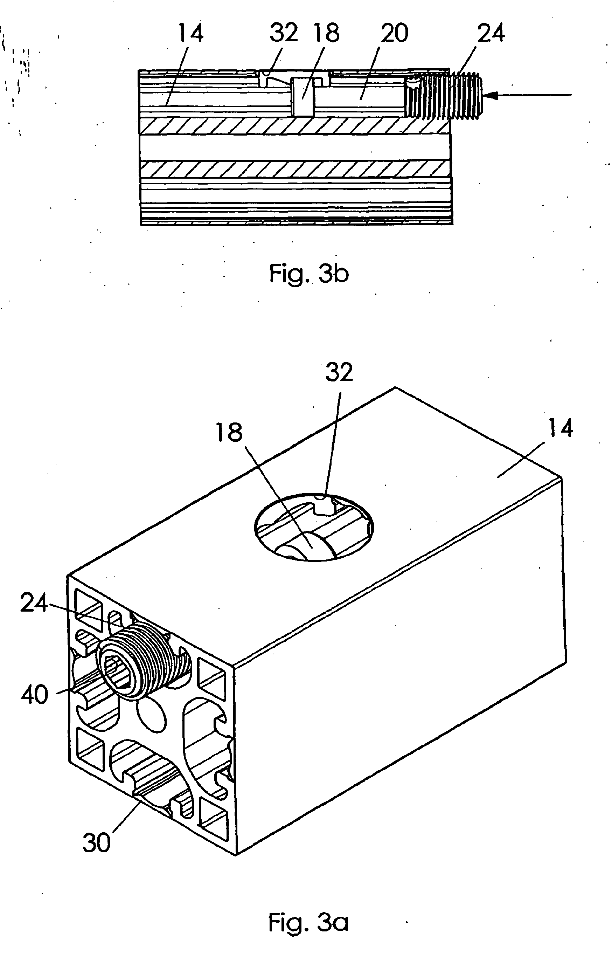

In Fig. 2 ist dargestellt, wie das Widerlagerstück 24 mit seinem konisch zulaufenden Teil voraus in die Längsnut 12 des ersten Profilstabs 14 eingesetzt wird. Dabei ist zusätzlich auch schon die Verbindungsschraube 20 vorhanden, die dann zusammen mit dem Widerlagerstück 24 in die Längsnut 12 hineinbewegt wird. Nach Hereindrehen etwa der Hälfte des Widerlagerstücks 24 ergibt sich das in den Figuren 3a und 3b gezeigte Bild.

Durch weiteres Hineindrehen des Widerlagerstücks 24 zusammen mit der Verbindungsschraube 20, die allerdings auch nachträglich erst eingesetzt werden kann, ergibt sich das in den Figuren 4a und 4b dargestellte Bild. Falls das Widerlagerstück 24 zu tief eingedreht wurde, kann es mit Hilfe einer Innenunrundausnehmung 40 im gezeigten Fall ein Innensechskant, soweit wieder herausgedreht werden, daß das Widerlagerstück 24 mit der Stirnseite des ersten Profilstabes 14 fluchtet. Selbstverständlich dient der Innensechskant 40 auch als Aufnahme für das Werkzeug (Imbusschlüssel) für den Eindreh- oder Einschraubvorgang. Anschließend wird die Verbindungsschraube 20 durch die Durchtrittsbohrung 26 hindurchgesteckt und in die Schraubenmutter 22 eingeschraubt und festgezogen, so daß der Kopf 18 auf dem Widerlagerstück 24 fest aufsitzt und damit den ersten Profilstab 14 mit der Stirnseite fest gegen den zweiten Profilstab 16 zieht. Für den ersten Profilstab 14 ist dies in den Figuren 5a und b gezeigt.

Abschließend kann dann die Montagebohrung 32 mittels einer nicht dargestellten Kappe verschlossen werden.

### Bezugszeichenliste:

- 10: System
- 12: Längsnut
- 14: erster Profilstab
- 16: zweiter Profilstab
- 18: Kopf
- 20: Verbindungsschraube
- 22: Schraubenmutter
- 22': Kugel
- 24: Widerlagerstück
- 26: Durchtrittsbohrung
- 28: Gewinde
- 28': Flanke
- 28": Flanke
- 30: Abschlußteil
- 32: Öffnung, Montagebohrung
- 34: Durchtrittsöffnung
- 36: Schneidkante
- 38: Querausnehmung
- 40: Innenunrundausnehmung
- D: Außendurchmesser
- Q: Querschnitt

## Patentansprüche

1. System (10) aus zwei T-förmig miteinander verbundenen, mit hinterschnittenen Längsnuten (12) versehenen Profilstäben (14,16), mit mindestens einer an ihrem einen Ende einen Kopf (18) aufweisenden Verbindungsschraube (20), die parallel zur Symmetrieachse eines längs verlaufenden ersten Profilstabes (14) in einer hinterschnittenen Längsnut (12) desselben angeordnet ist, mit ihrem anderen Ende in eine in einer hinterschnittenen Längsnut (12) des quer verlaufenden zweiten Profilstabs (16) angeordnete Schraubenmutter (22) eingreift und die mit ihrem Kopf (18) ein zylindrisches Widerlagerstück (24) hintergreift, das in die hinterschnittene Längsnut (12) des ersten Profilstabs (14) axial unverschieblich eingebaut ist und das eine Durchtrittsbohrung (26) für die Verbindungsschraube (20) hat, wobei die Symmetrieachse des zylindrischen Widerlagerstücks (24) koaxial zur Symmetrieachse der Durchtrittsbohrung (26) für die Verbindungsschraube (20) angeordnet ist und der Außendurchmesser (D) des Widerlagerstücks (24) dem Querschnitt (Q) der hinterschnittenen Längsnut (12) des ersten Profilstabs (14) so angepaßt ist, dass das auf dem Außenumfang des zylindrischen Widerlagerstücks (24) angebrachte Gewinde ein in den Werkstoff des ersten Profilstabs (14) eingreifendes selbstschneidendes Gewinde (28) ist, **dadurch gekennzeichnet, dass** die Längsnuten (12) mit einem einstückig mit den Profilstäben (14,16) verbundenen Abschlussteil (30) verschlossen sind, wobei der zum Grund der Längsnuten (12) weisende Bereich des Abschlußteils (30) eine an dem Außendurchmesser (D) des Widerlagerstücks angepaßte Kontur aufweist und dass lediglich die Spitzen des Gewindes (28) in die Kontur eingreifen.

2. System nach Anspruch 1, **dadurch gekennzeichnet, dass** der erste Profilstab (14) eine Öffnung (32) zum Einführen und/oder Betätigen der Verbindungsschraube (20) aufweist.

3. System nach Anspruch 1 oder 2, **dadurch gekennzeichnet, dass** die Öffnung eine Montagebohrung (32) ist.

4. System nach einem der Ansprüche 1 bis 3, **dadurch gekennzeichnet, dass** der zweite Profilstab (16) im Bereich der Schraubenmutter (22) eine Durchtrittsöffnung (34) für die Verbindungsschraube (20) aufweist.

5. System nach einem der Ansprüche 1 bis 4, **dadurch gekennzeichnet, dass** im Bereich seines Gewindes (28) das Widerlagerstück (24) eine Schneidkanten (36) bildende Querausnehmung (38) aufweist.

6. System nach Anspruch 5, **dadurch gekennzeichnet, dass** der Außenumriss des zylindrischen Widerlagerstücks (24) im Bereich der Schneidkanten (36) bildenden Querausnehmung (38) konisch ausgebildet ist.

7. System nach einem oder mehreren der Ansprüche 1 bis 6, **dadurch gekennzeichnet, dass** das schneidende Gewinde (28) des zylindrischen Widerlagerstücks (24) dem quer verlaufenden zweiten Profilstab (12) zugewendet steilere Flanken (28') aufweist, als verbindungsschraubenkopfseitig.

8. System nach einem oder mehreren der Ansprüche 1 bis 7, **dadurch gekennzeichnet, dass** die Durchtrittsbohrung (26) auf der dem Kopf (18) der Verbindungsschraube (20) abgewandten Seite als Innenunrundausnehmung (40) ausgebildet ist.

9. System nach Anspruch 6, **dadurch gekennzeichnet, dass** der Außendurchmesser des Kopfes (18) der Verbindungsschraube (20) etwa gleich dem Durchmesser der Stirnseite des zylindrischen Widerlagerstücks (24) ist, die die Querausnehmung (38) aufweist.

10. System nach einem der Ansprüche 1 bis 9, **dadurch gekennzeichnet, dass** die Profilstäbe (14,16) mindestens mit zwei Verbindungsschrauben (20), zwei Widerlagerstücken (24) und zwei Schraubenmuttern (22) miteinander verbunden sind.

11. System nach einem der Ansprüche 2 bis 10, **dadurch gekennzeichnet, dass** die Öffnung (32) mittels einer Kappe verschließbar ist.

12. System nach einem der Ansprüche 1 bis 11, **dadurch gekennzeichnet, dass** das Widerlagerstück (24) an dem schraubenkopfseitigen Ende mit einem Innengewindeabschnitt versehen ist, der zu dem Außengewinde der Verbindungsschraube (20) paßt.

## Claims

1. System (10) consisting of two profile bars (14, 16) which are connected together in a T-shaped manner and are provided with undercut longitudinal grooves (12), having at least one connection screw (20) which comprises a head (18) at one end and is disposed in parallel with the axis of symmetry of a longitudinally extending first profile bar (14) in an undercut longitudinal groove (12) thereof and whose other end engages into a screw nut (22) disposed in an undercut longitudinal groove (12) of the transversely extending second profile bar (16) and whose head (18) engages behind a cylindrical abutment piece (24) which is mounted in an axially non-displaceable manner in the undercut longitudinal groove (12) of the first profile bar (14) and has a through-going bore (26) for the connection screw (20), wherein the axis of symmetry of the cylindrical abutment piece (24) is disposed coaxially with respect to the axis of symmetry of the through-going bore (26) for the connection screw (20) and the outer diameter (D) of the abutment piece (24) is adapted to the cross-section (Q) of the undercut longitudinal groove (12) of the first profile bar (14) in such a manner that the thread attached to the outer periphery of the cylindrical abutment piece (24) is a self-tapping thread (28) engaging into the material of the first profile bar (14), **characterised in that** the longitudinal grooves (12) are closed by an end part (30) which is connected in one piece with the profile bars (14,16), wherein the region of the end part (30) facing the base of the longitudinal grooves (12) has an outline adapted to the outer diameter (D) of the abutment piece, and **in that** only the cone points of the thread (28) engage into the outline.

2. System as claimed in Claim 1, **characterised in that** the first profile bar (14) has an aperture (32) for introducing and/or manipulating the connection screw (20).

3. System as claimed in Claim 1 or 2, **characterised in that** the aperture is an assembly bore (32).

4. System as claimed in any one of Claims 1 to 3, **characterised in that** in the region of the screw nut (22) the second profile bar (16) comprises a through-going aperture (34) for the connection screw (20).

5. System as claimed in any one of Claims 1 to 4, **characterised in that** in the region of its thread (28) the abutment piece (24) has a transverse recess (38) forming cutting edges (36).

6. System as claimed in Claim 5, **characterised in that** the outer perimeter of the cylindrical abutment piece (24) is formed in a conical manner in the region of the transverse recess (38) forming cutting edges (36).

7. System as claimed in any one or several of Claims 1 to 6, **characterised in that** the tapping thread (28) of the cylindrical abutment piece (24) has steeper flanks (28') facing the transversely extending second profile bar (12) than on the connection screw head-side.

8. System as claimed in any one or several of Claims 1 to 7, **characterised in that** the through-going bore (26) on the side remote from the head (18) of the connection screw (20) is formed as an inner, non-circular recess (40).

9. System as claimed in Claim 6, **characterised in that** the outer diameter of the head (18) of the connection screw (20) is approximately equal to the diameter of the end side of the cylindrical abutment piece (24), which end side comprises the transverse recess (38).

10. System as claimed in any one of Claims 1 to 9, **characterised in that** the profile bars (14, 16) are connected together at least by means of two connection screws (20), two abutment pieces (24) and two screw nuts (22).

11. System as claimed in any one of Claims 2 to 10, **characterised in that** the aperture (32) can be closed by means of a cap.

12. System as claimed in any one of Claims 1 to 11, **characterised in that** on the screw head-side end the abutment piece (24) is provided with an inner thread portion which corresponds to the outer thread of the connection screw (20).

## Revendications

1. Système (10) composé de deux barres profilées (14, 16) reliées en forme de T et pourvues de rainures longitudinales contre-dépouillées (12), avec au moins une vis de liaison (20) qui présente à une extrémité une tête (18), qui est disposée, parallèlement à l'axe de symétrie d'une première barre profilée (14) s'étendant longitudinalement, dans une rainure contre-dépouillée (12) de celle-ci, qui entre avec son autre extrémité dans un écrou (22) disposé dans une rainure contre-dépouillée (12) de la seconde barre profilée (16), disposée transversalement, et qui vient en prise, avec sa tête (18), derrière une pièce de butée cylindrique (24) montée fixe axialement dans la rainure longitudinale (12) de la première barre profilée (14) et pourvue d'un perçage de passage (26) pour ladite vis de liaison (20), l'axe de symétrie de la pièce de butée cylindrique (24) étant coaxial par rapport à l'axe de symétrie du perçage de passage (26) pour la vis de liaison (20), et le diamètre extérieur (D) de la pièce de butée (24) étant adapté à la section transversale (Q) de la rainure longitudinale (12) de la première barre profilée (14) de telle sorte que le filetage prévu sur la circonférence extérieure de la pièce de butée cylindrique (24) soit un filetage autotaraudeur (28) qui pénètre dans la matière de la première barre profilée (14), **caractérisé en ce que** les rainures longitudinales (12) sont fermées par un obturateur (30) qui est relié d'une seule pièce aux barres profilées (14, 16), la zone dudit obturateur (30) tournée vers le fond des rainures (12) présentant un contour adapté au diamètre extérieur (D) de la pièce de butée, et **en ce que** seules les pointes du filetage (28) entrent dans ce contour.

2. Système selon la revendication 1, **caractérisé en ce que** la première barre profilée (14) présente une ouverture (32) pour l'introduction et/ou l'actionnement de la vis de liaison (20).

3. Système selon la revendication 1 ou 2, **caractérisé en ce que** l'ouverture est constituée par un perçage de montage (32).

4. Système selon l'une des revendications 1 à 3, **caractérisé en ce que** la seconde barre profilée (16) présente dans la zone de l'écrou (22) une ouverture de passage (34) pour la vis de liaison (20).

5. Système selon l'une des revendications 1 à 4, **caractérisé en ce que** dans la zone de son filetage (28), la pièce de butée (24) présente un creux transversal (38) qui forme des arêtes coupantes (36).

6. Système selon la revendication 5, **caractérisé en ce que** le contour extérieur de la pièce de butée cylindrique (24) a une forme conique dans la zone du creux transversal (38) qui forme les arêtes coupantes (36).

7. Système selon l'une au moins des revendications 1 à 6, **caractérisé en ce que** le filetage autotaraudeur (28) de la pièce de butée cylindrique (24) présente des flancs (28') qui ont une pente plus raide du côté de la seconde barre profilée (16) prévue transversalement, que du côté de la tête de la vis de liaison.

8. Système selon l'une au moins des revendications 1 à 7, **caractérisé en ce que** le perçage de passage (26) est conçu, du côté opposé à la tête (18) de la vis de liaison (20), comme un creux intérieur non circulaire (40).

9. Système selon la revendication 6, **caractérisé en ce que** le diamètre extérieur de la tête (18) de la vis de liaison (20) est à peu près égal au diamètre du côté frontal de la pièce de butée cylindrique (24) qui présente le creux transversal (38).

10. Système selon l'une des revendications 1 à 9, **caractérisé en ce que** les barres profilées (14, 16) sont reliées entre elles au moins à l'aide de deux vis de liaison (20), de deux pièces de butée (24) et de deux écrous (22).

11. Système selon l'une des revendications 2 à 10, **caractérisé en ce que** l'ouverture (32) est apte à être obturée à l'aide d'un cache.

12. Système selon l'une des revendications 1 à 11, **caractérisé en ce que** la pièce de butée (24) est pourvue, à son extrémité située du côté de la tête de vis, d'une partie à filetage intérieur qui correspond au filetage extérieur de la vis de liaison (20).
